(19) Europäisches Patentamt
European Patent Office
Office européen des brevets

(11) **EP 4 624 709 A1**

(12) **EUROPEAN PATENT APPLICATION**
published in accordance with Art. 153(4) EPC

(43) Date of publication:
**01.10.2025 Bulletin 2025/40**

(21) Application number: **23894217.1**

(22) Date of filing: **29.08.2023**

(51) International Patent Classification (IPC):
***E05B 49/00*** (2006.01)

(52) Cooperative Patent Classification (CPC):
**B60R 25/01; B60R 25/24; E05B 49/00;**
**E05B 65/00; G01S 5/02; G08B 13/00**

(86) International application number:
**PCT/JP2023/031254**

(87) International publication number:
**WO 2024/111201 (30.05.2024 Gazette 2024/22)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **24.11.2022 JP 2022187708**

(71) Applicant: **NTI, Inc.**
**Yokkaichi-shi**
**Mie 510-8021 (JP)**

(72) Inventor: **NAKAMURA, Takatoshi**
**Yokkaichi-shi, Mie 510-8021 (JP)**

(74) Representative: **Gill Jennings & Every LLP**
**The Broadgate Tower**
**20 Primrose Street**
**London EC2A 2ES (GB)**

(54) **ELECTRONIC KEY SYSTEM**

(57) To provide an electronic key system which is highly resistant to relay attacks, the electronic key system is built from a combination of an automobile and a key device. A user in an external space of the automobile presses a switch on the key device to transmit an OTP 1 generated by the key device to the automobile from the key device (Step S2001 to Step S2003). When the received OTP 1 matches the OTP 1 generated by the automobile, and the received OTP 1 is determined as having been transmitted from the external space of the automobile, the automobile generates lock data and unlocks the lock (Step S1001 to Step S1005). The user enters an internal space of the automobile, and presses the switch on the key device to transmit an OTP 2 generated by the key device to the automobile from the key device (Step S2004 to Step S2006). When the received OTP 2 matches the OTP 2 generated by the automobile, and the received OTP 2 is determined as having been transmitted from the internal space of the automobile, the automobile generates ignition data and switches an ignition switch to an ON state (Step S1006 to Step S1010).

FIG. 6

EP 4 624 709 A1

## Description

## Technical Field

The present invention relates to an electronic key system.

## Background Art

For example, key systems have been used for a long time in order to switch between a locked state and an unlocked state of a lock provided on a door. Traditionally, a key system has been a set of a lock and a key, and the lock can be unlocked by physically combining a key having a physical shape corresponding to the lock with the lock.

Subsequently, electronic key systems were proposed, and are now widely used. A typical electronic key system includes a key device, a lock, and an information processing device which has at least a function of switching the lock between a locked state and an unlocked state. In an electronic key system, predetermined data corresponding to the key is wirelessly transmitted from the key device to the information processing device. When the transmitted data is valid, the information processing device switches the lock from the locked state to the unlocked state, thereby unlocking the lock.

Electronic key systems are convenient because the systems do not require a physical combination of the key with the lock (for example, physical insertion of the key into a keyhole of the lock) as required by traditional key systems, and hence the use of electronic key systems is increasing.

## Summary of Invention

## Technical Problem

Despite the fact that the use of electronic key systems is increasing, there is room for improvement.

Electronic key systems are applied, for example, in order to switch the door lock of an automobile between a locked state and an unlocked state. However, as is well known, electronic key systems applied to automobiles are the target of a type of attack known as a relay attack.

Assuming that a relay attack is an attack that involves switching a door lock of an automobile from the locked state to the unlocked state by using predetermined data as the key that is to be wirelessly transmitted from the key device to the automobile in the relay attack and that the key device is located far enough away from the automobile that it is impossible for the predetermined key data to be transmitted to the automobile as the key.

In such a case, the data transmitted from the key device does not reach the automobile, and thus the automobile door is not switched from the locked state to the unlocked state by the data from the key device. This is where a malicious third party comes in. The malicious third party uses some sort of method to cause the key device to transmit the predetermined data as the key, and acquires that predetermined data. Then, the predetermined data corresponding to the key is amplified and passed through several relay devices, for example, to cause the predetermined data transmitted from the key device to arrive at the automobile, which is far away from the key device. The automobile receives the predetermined data corresponding to the key, and changes the lock from the locked state to the unlocked state based on the data. As a result, the malicious third party can get into the automobile.

What makes a relay attack problematic is that the data that the automobile receives from the key device via the relay devices is the original legitimate data generated by the key device, and thus it is impossible for the automobile which has received the data to determine whether or not there has been a fraudulent action in the transmission of the data. The malicious third party simply steals the entire data transmitted from the key device to the automobile, and amplifies and transfers the data, and hence the malicious third party is not required to understand the content of the transmitted data, and further, the malicious third party is not required to decrypt the data in a case in which the data has been encrypted. That is, this relay attack is extremely problematic in that it is impossible to defend against such an attack no matter how well the method of generating the data transmitted from the key device to the automobile maintains secrecy, or how sophisticated the encryption processing used on that data is.

In the above-mentioned example, the malicious third party successfully got into the automobile by changing the lock of the automobile door from the locked state to the unlocked state, but has not succeeded in turning on an ignition switch. However, there are fraudulent technologies for turning on the ignition switch, such as that using an immobilizer bypass.

Further, for example, when predetermined data is expected to be transmitted one more time from the key device to the automobile in order to turn on the ignition switch in a valid manner, a malicious third party can turn on the ignition switch by repeating the above-mentioned relay attack one more time.

When a malicious third party who gets into an automobile can somehow turn on the ignition switch, it becomes inevitable that the automobile will be stolen.

As a matter of course, relay attacks can be applied not only to cases in which an electronic key system is used for automobiles, but also to cases in which an electronic key system is used for vehicles other than automobiles, or for the doors of buildings.

An object of the present invention is to provide an electronic key system that is resistant to attacks from malicious third parties, such as relay attacks.

**Solution to Problem**

In order to achieve the above-mentioned object, the inventor of the present application proposes the following invention. According to the present invention, there is provided an electronic key system including: a target object which includes: a door which is openable and closable and which separates an internal space which is a space on an inner side of the door from an external space which is a space on an outer side of the door; a lock which is freely selectable between a locked state in which the door is not openable and an unlocked state in which the door is openable; a reception unit which wirelessly receives predetermined data; and an information processing device which executes information processing; and a key device to be used in combination with the target object which includes: a key device one-time password generator to generate a one-time password; and a transmission unit which wirelessly transmits the one-time password generated by the key device one-time password generator. The target object is an "object" which includes a door of which the locked state and the unlocked state can be selected by installing a lock therein. Examples of target objects include automobiles and other vehicles, and rooms in a building which are separated by a door. Doors divide an internal space from an external space. That is, on an inner side of the target object there is an internal space, and on an outer side of the door there is an external space. The concepts of "internal" and "external" can be determined in accordance with accepted social standards. For example, when the target object is an automobile or a room, the interior of the automobile or the room is "internal" and the exterior of the automobile or the room is "external."

The information processing device of the target object includes: a target object one-time password generator which generates the same one-time password as the one-time password generated by the key device one-time password generator; an internal/external determination module which determines whether the one-time password received from the key device via the reception unit has been transmitted from the key device located in the external space or from the key device located in the internal space; an authentication determination module which determines whether the one-time password received from the key device via the reception unit matches the one-time password generated by the target object one-time password generator; and a drive module which changes the lock between the locked state and the unlocked state and switches ON/OFF of a predetermined device different from the lock.

Further, the drive module is configured to change the lock from the locked state to the unlocked state when the one-time password from the key device determined by the internal/external determination module as having been transmitted from the key device located in the external space matches the one-time password generated by the target object one-time password generator, and to then switch ON/OFF of the predetermined device when the one-time password from the key device determined by the internal/external determination module as having been transmitted from the key device located in the internal space matches the one-time password generated by the target object one-time password generator.

The key device of this electronic key system includes the key device one-time password generator which generates a one-time password, and the transmission unit which wirelessly transmits the one-time password generated by the key device one-time password generator. The key device is configured to wirelessly transmit the one-time password generated by the key device one-time password generator to the target object. The one-time password is disposable data that is used only one time. The one-time password is, for example, a string of characters, numbers, or symbols, or a combination of two or more of those. The one-time password is transmitted wirelessly from the key device to the target object as a de facto key. The target object receives the one-time password by using the reception unit included therein.

Meanwhile, the target object includes the information processing device. The information processing device has a function of executing information processing, and is built from or includes a computer.

The information processing device of the target object includes the target object one-time password generator which generates the same one-time password as that generated by the key device one-time password generator. That is, the key device and the target object are capable of generating the same one-time password independently of each other. Technologies for generating the same one-time password at locations distant from each other are publicly-known or well-known, and are already being widely used in technical fields such as Internet banking. Through applying such technologies, it is possible, and even easy, to generate the same one-time password at locations distant from each other. Examples of known technologies for generating the same one-time password at locations distant from each other include a method of synchronizing solutions (one-time passwords) based on the number of solutions that have been generated in the past (or order of the solutions that have been generated (what ordinal number the solution is)) (so-called event synchronization), and a method of synchronizing solutions based on the current date and time (so-called time synchronization). Any one of those methods may be used.

The information processing device also includes the internal/external determination module which determines whether the one-time password received from the key device via the reception unit has been transmitted from the key device located in the external space or from the key device located in the internal space. The function of the internal/external determination module enables the information processing device to determine whether the one-time password received from the key device has been transmitted from the internal space or from the external space.

The information processing device also includes the authentication determination module which determines whether the one-time password received from the key device matches the one-time password generated by the target object one-time password generator. Through using the authentication determination module, it becomes possible to verify the validity of the one-time password received from the key device. As a matter of course, when the one-time password received from the key device matches the one-time password generated by the target object one-time password generator, the one-time password received from the key device is deemed to be valid.

The information processing device also includes the drive module having a function of changing the lock included in the target object from the locked state to the unlocked state, and a function of switching ON/OFF of a predetermined device different from the lock. The lock is switched between the locked state and the unlocked state by the drive module. For example, when the lock switches from the locked state to the unlocked state, the door can be opened. The predetermined device different from the lock that the drive module controls varies depending on the type of the target object. For example, when the target object is an automobile or other vehicle, the predetermined device different from the lock may be an ignition switch. For example, when the target object is a room in a building, the predetermined device different from the lock may be a security device or a main power supply device of the room.

Further, the drive module of the information processing device of the target object is configured to change the lock from the locked state to the unlocked state when the one-time password from the key device determined by the internal/external determination module as having been transmitted from the key device located in the external space matches the one-time password generated by the target object one-time password generator. That is, when the drive module finds the one-time password transmitted from the key device located on the outer side of the door to be valid, the drive module changes the lock from the locked state to the unlocked state, allowing the door to be opened. In addition, the drive module is configured to switch ON/OFF of the predetermined device when, after the lock has been changed from the locked state to the unlocked state, the one-time password from the key device determined by the internal/external determination module as having been transmitted from the key device located in the internal space matches the one-time password generated by the target object one-time password generator. That is, when the drive module finds the one-time password transmitted from the key device located on the inner side of the door to be valid, the drive module switches the ON/OFF of the predetermined device. For example, when the ON/OFF of the predetermined device is essential in order for the user to use the target object, or at least essential to use the target object in a stress-free manner, a user who has entered the internal space via the door can use the target object, for example, in a stress-free manner by switching the ON/OFF of the predetermined device executed by the drive module.

According to the present invention, verification of the validity of one-time passwords transmitted from the key device to the target object is performed at least twice, by using a one-time password transmitted from the external space on an outer side of the door and a one-time password transmitted from the internal space on an inner side of the door. The one-time passwords, which is data serving as a key, change each time a one-time password is transmitted from the key device to the target object, and hence the authentication performed by transmitting one-time passwords a plurality of times requires the transmission order of the plurality of one-time passwords to be accurate, thus reducing the possibility of malicious use by a third party. In addition, in the present invention, the one-time password for the purpose of switching the ON/OFF of the predetermined device after the lock of the target object is unlocked is required to be transmitted from the internal space, and hence the switching of the ON/OFF of the predetermined device cannot be properly performed when the one-time password is transmitted from the external space, such as in a relay attack. For example, when the target object is an automobile and the predetermined device is the ignition switch, this means that a malicious third party can open the door of the automobile, but cannot turn on the ignition switch.

Therefore, according to the present invention, it is possible to effectively prevent a third party from committing a fraudulent action against an electronic key system.

As described above, in the electronic key system of the present application, verification of the validity of one-time passwords transmitted from the key device to the target object is performed at least twice by using a one-time password transmitted from the external space on an outer side of the door and a one-time password transmitted from the internal space on an inner side of the door.

Here, the drive module may be configured to change the lock from the locked state to the unlocked state when the one-time password from the key device determined by the internal/external determination module as having been transmitted from the key device located in the external space matches the one-time password generated by the target object one-time password generator by the number of times of two or more determined in advance. In this case, the one-time password transmitted from the external space on the outer side of the door is verified a plurality of times, and the lock changes from the locked state to the unlocked state only when all of the verifications are successful.

Here, the drive module may be configured to switch the ON/OFF of the predetermined device when the one-time password from the key device determined by the internal/external determination module as having been transmitted from the key device located in the internal space matches the one-time password generated by the target object one-time password generator by the number of times of two or more determined in advance. In this case, the one-time password transmitted from the internal space on the inner side of the door is verified a plurality of times, and the ON/OFF state of the predetermined device is switched only when all of the verifications are successful.

As described above, the internal/external determination module determines whether the one-time password received from the key device via the reception unit has been transmitted from the key device located in the external space or from the key device located in the internal space. This determination may be performed in any manner. For example, the determination may be performed as follows.

For example, the target object may include a location detection device which detects whether the key device is located in the external space or the internal space by capturing radio waves output by the key device at predetermined time intervals, and generates location data corresponding to a location in which the key device is present, and the internal/external determination module may be configured to determine, based on the location data generated by the location detection device, whether the one-time password received from the key device via the reception unit has been transmitted from the key device located in the external space or from the key device located in the internal space.

Further, the target object may include a human sensor. In a case in which a one-time password is received from the key device when the presence of a person in the internal space is detected by the human sensor, the internal/external determination module can determine that the one-time password has been transmitted from the internal space.

Moreover, the internal space of the target object may have a recess into which the key device can be snugly fitted, and a base that can detect whether or not the key device is fitted into the recess. When a one-time password is received from the key device under a state in which it has been detected that the key device is fitted into the recess of the base, the internal/external determination module can determine that the one-time password has been transmitted from the internal space.

The drive module may be configured to maintain the locked state of the lock for at least a predetermined period of time when, after the lock has been changed from the locked state to the unlocked state, the one-time password is transmitted from the key device located in the external space, or the one-time password from the key device determined by the internal/external determination module as having been transmitted from the key device located in the internal space does not match the one-time password generated by the target object one-time password generator.

## Brief Description of Drawings

FIG. 1 is a diagram for illustrating an overall configuration of an electronic key system of a first embodiment of the present invention;
FIG. 2 is a diagram for illustrating a hardware configuration of an automobile included in the electronic key system illustrated in FIG. 1;
FIG. 3 is a diagram for illustrating a hardware configuration of a computer device illustrated in FIG. 2;
FIG. 4 is a block diagram for illustrating function blocks generated inside the computer device illustrated in FIG. 2;
FIG. 5 is a block diagram for illustrating function blocks generated inside a key device illustrated in FIG. 1;
FIG. 6 is a flowchart for illustrating a usage method and operation of the electronic key system illustrated in FIG. 1; and
FIG. 7 is a diagram for illustrating a hardware configuration of an automobile included in an electronic key system of Modification Example 2.

## Description of Embodiments

Description is now given of a first embodiment and a second embodiment of the present invention. In the description of each embodiment, like parts are denoted by like reference numerals, and duplicate descriptions are omitted as the case may be.

Further, variations described in each embodiment can be combined with another embodiment unless there are special circumstances preventing such a combination, such as when the combination would lead to a contradiction occurring.

<<First Embodiment>>

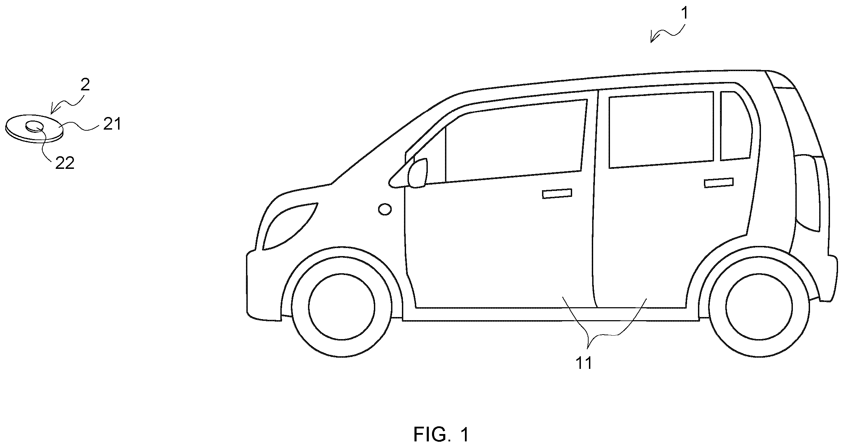

In FIG. 1, an overall configuration of an electronic key system of the first embodiment is schematically illustrated.

The electronic key system includes an automobile 1 and a key device 2. The automobile 1 and the key device 2 are paired. In other words, the key device 2 illustrated in FIG. 1 is a key device 2 which is exclusively used for the automobile 1 illustrated in FIG. 1.

The automobile 1 is an example of the target object of the present application. The automobile 1 may be another vehicle, such as a heavy machinery vehicle, a ship, or an airplane. Further, the automobile 1 may be a room in a real estate.

The automobile 1 includes a door 11. As is well known, the door 11 may be opened and closed in an unlocked state, which is described later. The door 11 separates an internal space, which is a space of the car on an inner side of the door 11, from an external space, which is a space on an outer side of the door 11. The external space and the internal space are separated so that people can enter and exit only via the door 11. The internal space is the space inside the automobile 1, and the external space is the space outside the automobile 1.

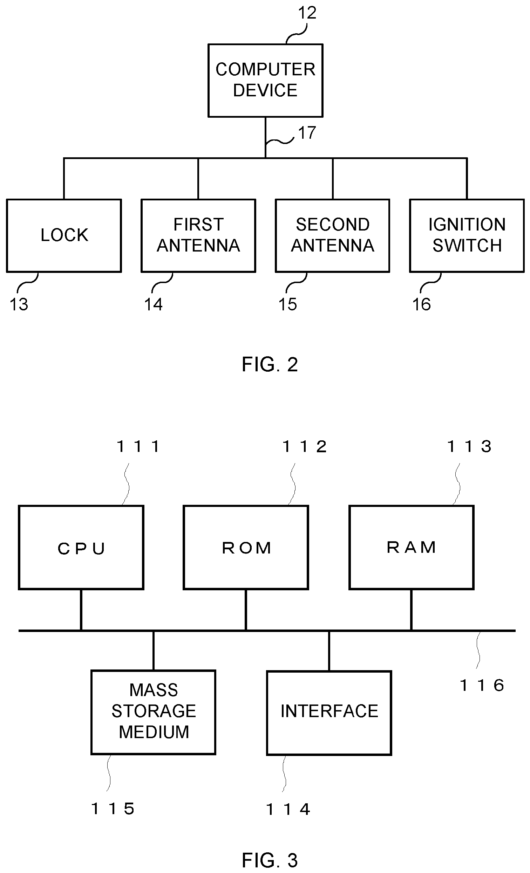

In FIG. 2, a hardware configuration of the automobile 1 is illustrated. However, the hardware configuration illustrated in FIG. 2 is the hardware configuration only of the automobile 1 that is related to the electronic key system.

The automobile 1 includes a computer device 12, which corresponds to an information processing device as referred to in the present application, a lock 13 attached to the door 11, a first antenna 14 and a second antenna 15 for wireless communication, and an ignition switch 16.

The computer device 12 is connected to the lock 13, the first antenna 14, the second antenna 15, and the ignition switch 16 by a connection line 17.

The lock 13 is attached to the door 11, and locks or unlocks the door 11. A locked state and an unlocked state are alternative choice. In the locked state, the door 11 of the automobile 1 cannot be opened and closed, and in the unlocked state, the door 11 can be opened and closed. It is sufficient for the lock 13 as described above to be a publicly-known or well-known electric lock, and such an electric lock is used in this embodiment. The lock 13 switches between the locked state and the unlocked state under the control of the computer device 12.

The first antenna 14 is a device for receiving data of a one-time password, which is described later, issued from the key device 2 when the key device 2 is present in the external space or the internal space. The first antenna 14 is exposed to the external space and the internal space of the automobile 1 across both spaces, for example. It is sufficient for the first antenna 14 to be a publicly-known or well-known antenna as long as the first antenna 14 can receive radio waves wirelessly. The data of the one-time password received by the first antenna 14 is transmitted to the computer device 12 via the connection line 17.

The second antenna 15 is a device for receiving weak radio waves emitted from the key device 2 as described later when the key device 2 is present in the internal space. When the key device 2 is located in the external space, the second antenna 15 is adjusted so that the second antenna 15 does not receive the weak radio waves. The second antenna 15 is exposed to the internal space of the automobile 1, for example. It is sufficient for the second antenna 15 to be a publicly-known or well-known antenna as long as the second antenna 15 can receive radio waves wirelessly. The weak radio waves received by the second antenna 15 are transmitted to the computer device 12 via the connection line 17.

In this embodiment, the first antenna 14 receives the data of the one-time password carried on radio waves, and the second antenna 15 receives the weak radio waves from the key device 2 located in the internal space. When it is possible to receive the data of the one-time password and the weak radio waves by using one antenna, one of the first antenna 14 and the second antenna 15 may be omitted, and the remaining one of the first antenna 14 or the second antenna 15 may be responsible for the functions of both the first antenna 14 and the second antenna 15.

The ignition switch 16 is a well-known switch for starting an engine (not shown) of the automobile 1. In an initial state, the ignition switch 16 is in an OFF state, but the ignition switch 16 is turned to an ON state in the manner described later. When the ignition switch 16 is turned ON, the engine of the automobile 1 starts.

Description is now given of the computer device 12. The computer device 12 is a device which executes information processing. It is sufficient for the computer device 12 to use any publicly-known or well-known hardware as long as information processing such as that described later can be executed, and the hardware may be general-purpose hardware or commercially available hardware.

As illustrated in FIG. 3, the hardware of the computer device 12 includes a central processing unit (CPU) 111, a read-only memory (ROM) 112, a random-access memory (RAM) 113, an interface 114, and a mass storage medium 115, which are interconnected to each other by a bus 116.

The CPU 111 is an arithmetic device which performs calculations. The CPU 111 executes processing described later by executing computer programs recorded in the ROM 112, the RAM 113, or the mass storage medium 115, for example.

The ROM 112 has recorded therein computer programs and data required for the CPU 111 to execute the processing described later. The same applies to the mass storage medium 115. The mass storage medium 115 is, for example, a hard disk drive (HDD) or a solid-state drive (SSD). The mass storage medium 115 is not a required piece of hardware.

In relation to the present invention, the computer programs recorded in the ROM 112 and the mass storage medium 115 are computer programs for causing a general-purpose computer to function as an information processing device included in the target object in the electronic key system according to the present invention. However, as a matter of course, a computer program unrelated to the electronic key system according to the present invention may be recorded in the ROM 112 and the mass storage medium 115.

The RAM 113 provides a work area required for the CPU 111 to perform processing. In some cases, for example, a part of the computer programs and data described above may be recorded in the RAM 113.

The interface 114 is for exchanging data between the CPU 111, the RAM 113, and the like, which are connected via the bus 116, and the outside. The lock 13, the first antenna 14, the second antenna 15, and the ignition switch 16 are connected to the interface 114.

Data which is described later is output from the interface 114 to the lock 13 and the ignition switch 16, and data which is described later is input from the first antenna 14 and the second antenna 15.

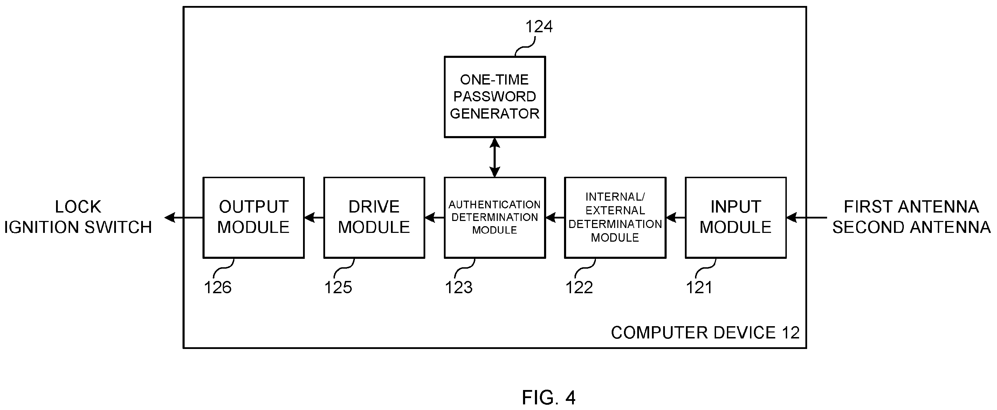

The CPU 111 executes a computer program to generate, in relation to the electronic key system according to the present invention, function blocks like those illustrated in FIG. 4 inside the computer device 12. The function blocks described below may be generated by a function of a computer program alone for causing the computer device 12 to function as an information processing device of the target object in the electronic key system according to the present invention, or those function blocks may be generated by the computer program working in cooperation with an OS or another computer program installed on the computer device 12.

In the computer device 12, in relation to the present invention, as illustrated in FIG. 4, at least an input module 121, an internal/external determination module 122, an authentication determination module 123, a one-time password generator 124, a drive module 125, and an output module 126 are generated.

Of those modules, the input module 121 and the output module 126 correspond to the interface 114 when viewed as hardware, or are implemented by functions of the interface 114. More specifically, the input module 121 and the output module 126 conceptually correspond to a connection portion between the interface 114 and the bus 116.

Further, the internal/external determination module 122, the authentication determination module 123, the one-time password generator 124, and the drive module 125 correspond to the CPU 111, which is an arithmetic device, in terms of hardware, or are implemented by functions of the CPU 111.

The input module 121 receives inputs from the interface 114.

The data input from the interface 114 to the input module 121 includes a one-time password input from the first antenna 14 and weak radio waves input from the second antenna 15.

When those pieces of data are received, the input module 121 transmits the received data to the internal/external determination module 122.

The internal/external determination module 122 determines the location of the key device 2 from which the data relating to the one-time password received from the input module 121 has been transmitted. More specifically, the internal/external determination module 122 determines whether the one-time password received from the key device 2 has been transmitted from the key device 2 located in the external space or from the key device 2 located in the internal space. The specific method for such determination is described later.

When the internal/external determination module 122 determines that the one-time password has been transmitted from the key device 2 located in the external space, the internal/external determination module 122 generates external data, which is data indicating that the one-time password has been transmitted from the key device 2 located in the external space, and when the internal/external determination module 122 determines that the one-time password has been transmitted from the key device 2 located in the internal space, the internal/external determination module 122 generates internal data, which is data indicating that the one-time password has been transmitted from the key device 2 located in the internal space. The internal/external determination module 122 transmits the generated external data or internal data to the authentication determination module 123 together with the one-time password which has triggered the generation of the external data or internal data.

The authentication determination module 123 has a function of verifying the validity of a one-time password received from the internal/external determination module 122. When the authentication determination module 123 receives a one-time password from the internal/external determination module 122, the authentication determination module 123 requests the one-time password generator 124 to generate a one-time password. When the one-time password generator 124 receives the request, the one-time password generator 124 generates a one-time password, and transmits the generated one-time password to the authentication determination module 123. The authentication determination module 123 determines whether or not the one-time password received from the internal/external determination module 122 matches the one-time password received from the one-time password generator 124. When the two one-time passwords match, the authentication determination module 123 generates result data indicating that the one-time password received from the internal/external determination module 122 is valid, and when the two one-time passwords do not match, the authentication determination module 123 generates result data indicating that the one-time password received from the internal/external determination module 122 is not valid. The generated result data is transmitted from the authentication determination module 123 to the drive module 125.

The one-time password generator 124 generates the one-time password as described above. The one-time password generated by the one-time password generator 124 is, as described later, the same as the one-time password generated by the key device 2 paired with the automobile **1**. Description of how the one-time password is generated by the one-time password generator 124 is given later.

The drive module 125 receives the above-mentioned result data from the authentication determination module 123, and generates any one of lock data, which is data for controlling the lock 13, and ignition data, which is data for switching ON/OFF of the ignition switch 16, in accordance with the content of the result data. The lock data may be data for switching the lock 13 from the locked state to the unlocked state, or data for switching the lock 13 from the unlocked state to the locked state. The ignition data is data for switching the ignition switch 16 from the OFF state to the ON state. Description of the conditions under which the drive module 125 generates the lock data or the ignition data as described above is given later. The drive module 125 transmits the generated lock data or ignition data to the output module 126.

The output module 126 may receive the lock data and the ignition data from the drive module 125. When the output module 126 receives the lock data, the output module 126 transmits the lock data to the lock 13 via the interface 114 and the connection line 17. The lock 13 receives the lock data, and switches from the locked state to the unlocked state or from the unlocked state to the locked state in accordance with the received lock data. When the output module 126 receives the ignition data, the output module 126 transmits the ignition data to the ignition switch 16 via the interface 114 and the connection line 17. The ignition switch 16 receives the ignition data, then changes from the OFF state to the ON state.

Next, description is given of the key device 2.

As illustrated in FIG. 1, the key device 2 includes a case 21 which is large enough to be held in hand. In this embodiment, the case 21 includes a push-button switch 22, but the switch 22 is not limited thereto. As described later, the user can cause the key device 2 to generate a one-time password each time the switch 22 is pressed.

The key device 2 in this embodiment is a dedicated product for an electronic key system. However, as long as the key device 2 can perform the functions described below, the key device 2 may be included in a general-purpose product such as a smartphone or a tablet computer. In that case, the smartphone, for example, has the function of the key device 2 in this embodiment by means of a computer program (app) installed on the smartphone as a general-purpose product, for example.

The case 21 of the key device 2 has a built-in computer device (not shown). The details of the computer device do not matter as long as the computer device is capable of executing predetermined information processing, and the computer device may be a publicly-known or well-known device, and may be a commercially available device. In this embodiment, when viewed as hardware, the computer device in the key device 2 has the same configuration as that of the computer device 12 mounted in the automobile 1, but the computer device is not limited thereto.

That is, the key device 2 includes a CPU, a ROM, a RAM, and an interface. However, the key device 2 generally does not include a mass storage medium.

The configurations and functions of the CPU, the ROM, the RAM, and the interface in the key device 2 are equivalent to the configurations and functions of the CPU 111, the ROM 112, the RAM 113, and the interface 114 in the computer device 12, respectively.

The switch 22 is connected to the interface of the key device 2. When the switch 22 is pressed, an input signal is input, and the input signal reaches the CPU from the switch 22 via the interface. Further, the key device 2 includes a transmitting mechanism, and the transmitting mechanism is also connected to the interface. The transmitting mechanism receives data of a one-time password, which is described later, generated by the key device 2 via the interface, and has a function of wirelessly transmitting the received data of the one-time password to the first antenna 14 included in the automobile **1.** The transmitting mechanism can be built from a publicly-known or well-known wireless communication device, and such a transmitting mechanism is used in this embodiment.

Further, in this embodiment, the transmitting mechanism also serves as a transmitter of weak radio waves. In this embodiment, the weak radio waves are constantly transmitted from the transmitting mechanism, but the present invention is not limited thereto. Moreover, the transmitter of the weak radio waves is not required to also serve as a transmitting mechanism. In addition to hardware such as the CPU, the ROM, the RAM, the interface, and the transmitting mechanism, the key device 2 may include a transmitter in a state of being connected to the interface, for example. The weak radio waves are, for example, low-frequency radio waves.

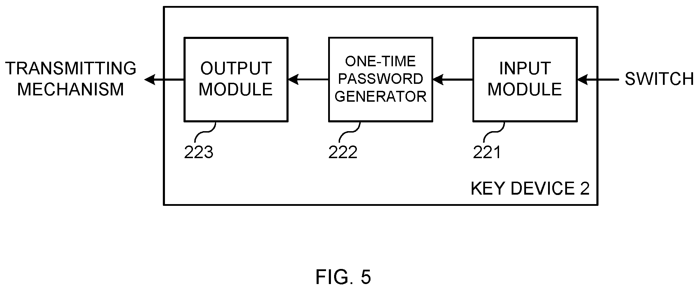

The CPU executes a computer program to generate, in relation to the electronic key system according to the present invention, function blocks like those illustrated in FIG. 5 inside the key device **2.** The function blocks described below may be generated by a function of a computer program alone for causing the key device 2 to function as a key device in the electronic key system according to the present invention, or those function blocks may be generated by the computer program working in cooperation with the OS or another computer program installed on the key device 2.

In the key device 2, in relation to the present invention, as illustrated in FIG. 5, at least an input module 221, a one-time password generator 222, and an output module 223 are generated.

Of those modules, the input module 221 and the output module 223 correspond to the interface when viewed as hardware, or are implemented by functions of the interface. More specifically, the input module 221 and the output module 223 conceptually correspond to a connection portion between the interface and a bus.

Further, the one-time password generator 222 corresponds to a CPU, which is an arithmetic device, in terms of hardware, or is implemented by functions of the CPU.

The input module 221 receives inputs from the interface.

The data input from the interface to the input module 221 includes an input signal generated by the user pressing the switch 22. When the input module 221 receives the input signal, the input module 221 transmits the input signal to the one-time password generator 222.

The one-time password generator 222 has a function of generating a one-time password. The one-time password generator 222 may receive the input signal as described above. When the one-time password generator 222 receives the input signal, the one-time password generator 222 generates a one-time password. The one-time password generated by the one-time password generator 222 is the same as (is synchronous with) the one-time password generated by the one-time password generator 124 of the automobile 1. The method used by the one-time password generator 222 to generate the one-time password is described later. The one-time password generator 222 transmits the data of the generated one-time password to the output module 223.

The output module 223 may receive the data of the one-time password from the one-time password generator 222. When the output module 223 receives the data of the one-time password, the output module 223 transmits the data of the one-time password to the transmitting mechanism via the interface. The transmitting mechanism transmits the data of the one-time password to the first antenna 14 of the automobile 1 on radio waves.

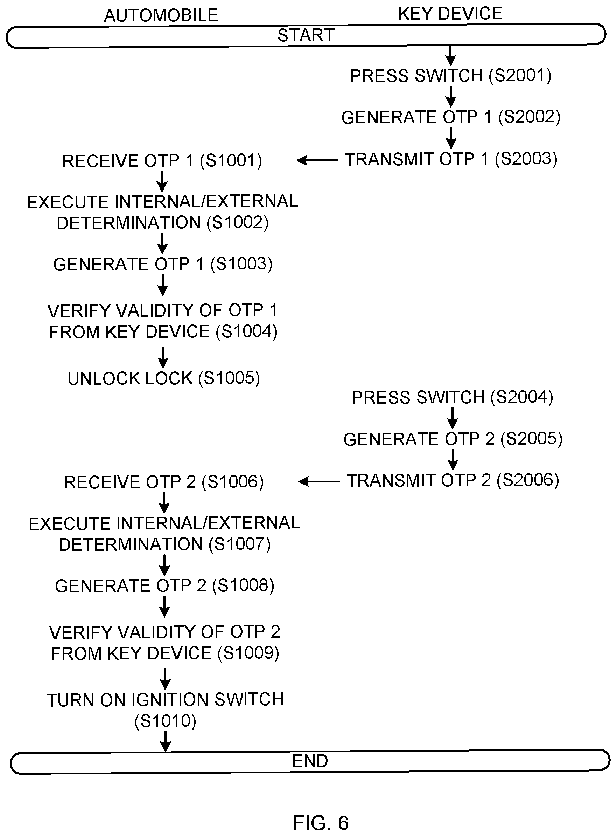

Description is now given of a usage method and operation of the electronic key system described above with reference to FIG. **6.**

A user tries to get into the automobile **1.**

The user, who is in the external space, approaches the automobile 1 while holding the key device **2.** The transmitting mechanism of the key device 2 is constantly emitting weak radio waves, and hence at this time as well the key device 2 is emitting weak radio waves. However, the second antenna 15 of the automobile 1 which has the function of receiving weak radio waves, can receive weak radio waves only when the key device 2 is located in the internal space of the automobile **1.**

When the user approaches to within a certain distance from the automobile 1, the user presses the switch 22 of the key device 2 (Step S2001).

When the switch 22 is pressed, the switch 22 generates an input signal. The input signal passes through the interface and the input module 221, and reaches the one-time password generator 222.

When the one-time password generator 222 receives the input signal, the one-time password generator 222 generates a one-time password (Step S2002). The one-time password can be a sequence of at least one of characters, numbers, and symbols, and is such a sequence in this embodiment. Although it is not required that all one-time passwords have the same number of digits (number of characters), in this embodiment, the number of digits (number of characters) is the same for all one-time passwords.

The one-time password generator 222 may use any publicly-known or well-known method to generate the one-time password. Examples of known technologies for generating the same one-time password in locations distant from each other include a method of synchronizing solutions (one-time passwords) based on the number of solutions that have been generated in the past (or order of the solutions that have been generated (what ordinal number the solution is)) (so-called event synchronization), and a method of synchronizing solutions based on the current date and time (so-called time synchronization). Any one of those methods may be used.

When so-called event synchronization technology is used, the one-time password generator 222 can continuously generate solutions by repeating, for example, processing of performing a predetermined calculation on a certain initial value to obtain a solution as a one-time password, then again performing the predetermined calculation on that solution to obtain the next solution, then again performing the predetermined calculation on that solution to obtain the next solution, and so on. Such a technology is well known as a technology for generating pseudorandom numbers.

Description is now given of a more specific method of generating solutions.

A method which successively creates a new value by using a certain initial value (there may be two or more) and substituting past values into a predetermined function in order to generate a solution may be executed each time a solution is required. Through using this method, the above-mentioned solutions can be continuously generated. The solution in this case is a pseudorandom number that depends on the initial value.

The following expressions (a) to (c) are examples of functions that may be used to create the above-mentioned solutions. The following expressions (a) to (c) are all expressions for creating $X_N$, which is the N-th solution. Further, P, Q, R, and S are natural numbers.

(a)

$$(X_N) = (X_{N-1})^P + (X_{N-2})^Q$$

(b)

$$(X_N) = (X_{N-1})^P$$

(c)

$$(X_N) = (X_{N-1})^P (X_{N-2})^Q (X_{N-3})^R (X_{N-4})^S$$

In the expression (a), a new solution is generated through use of two past solutions by adding together those two past solutions raised to the power of P and Q, respectively. To be more precise, the number of digits usually increases when two past solutions are used and those two past solutions raised to the power of P and Q, respectively, are added together, and hence in reality, a new solution is generated by, for example, extracting an appropriate number of digits from the beginning of the obtained value, extracting an appropriate number of digits from the end of the obtained value, or extracting an appropriate number of digits from an appropriate part of the obtained value.

In the expression (b), a new solution is generated through use of one past solution by raising the one past solution to the power of P, and rearranging the number of digits as described above.

In the expression (c), a new solution is generated through use of four past solutions by obtaining a product of those four past solutions raised to the power of P, Q, R, and S, respectively, and rearranging the number of digits as described above.

The generated solution is used when a new solution is generated, and hence the generated solution is held in, for example, the one-time password generator 222 until the generated solution is no longer required in order to generate a new solution. In the examples of the expressions (a), (b), and (c) above, the one-time password generator 222 constantly stores two, one, and four solutions, respectively, while overwriting the previous past solution each time a new solution is generated. The function the one-time password generator 222 has of holding or optionally recording the solution as a one-time password is implemented by, from a hardware perspective, the RAM, for example.

The above-mentioned expressions (a) to (c) are examples of algorithms for generating solutions, and it is possible to make changes to the algorithms when a solution is generated, for example, by using the above-mentioned expressions (a) to (c) in order. Further, the solution can be made time-dependent, that is, a change can be made in accordance with the current time.

In any case, when the one-time password generator 222 has generated a one-time password, the one-time password generator 222 transmits the data of the one-time password to the output module 223.

The output module 223 transmits the generated one-time password to the transmitting mechanism via the interface. The transmitting mechanism wirelessly transmits the data of the one-time password to the automobile 1 (Step S2003). The one-time password that is created first may be referred to as "one-time password 1" ("OTP 1") for convenience, and the same applies hereinafter.

As described above, when the user presses the switch 22 of the key device 2, data of the OTP 1 is generated in the key device 2 and transmitted to the automobile 1 wirelessly.

The automobile 1 receives the data of the OTP 1 that is carried on radio waves by using the first antenna 14 (Step S1001) . The data of the OTP 1 reaches the input module 121 from the first antenna 14 via the interface 114, and is transmitted from the input module 121 to the internal/external determination module 122.

The internal/external determination module 122 determines whether or not the data of the OTP 1 has been transmitted from the key device 2 located in the internal space of the automobile 1 or from the key device 2 located in the external space of the automobile 1 (performs internal/external determination) (Step S1002). In this embodiment, the internal/external determination module 122 determines that the key device 2 is present in the internal space (determines that the data of the one-time password received at that time has been transmitted from the key device 2 located in the internal space of the automobile 1) when the second antenna 15 is receiving weak radio waves from the key device 2 when the data of the one-time password is received, and determines that the key device 2 is present in the external space (determines that the data of the one-time password received at that time has been transmitted from the key device 2 located in the external space of the automobile 1) when the second antenna 15 is not receiving weak radio waves from the key device 2 when the data of the one-time password is received.

As described above, at the timing when the data of the OTP 1 is transmitted from the key device 2 to the automobile 1, weak radio waves are being transmitted from the key device 2, but the second antenna 15 is in a state in which the second antenna 15 cannot receive weak radio waves. When weak radio waves are received, the weak radio waves (or a signal indicating that weak radio waves have been received) are transmitted from the second antenna 15 to the internal/external determination module 122 via the interface 114 and the input module 121 in substantially real time. In this case, the internal/external determination module 122 has not received a signal indicating that weak radio waves have been received, and thus the internal/external determination module 122 determines that "the data of the OTP 1 has been transmitted from the key device 2 located in the external space of the automobile 1," and generates external data indicating this determination.

When the external data is generated, the internal/external determination module 122 transmits the data of the OTP 1 together with the external data to the authentication determination module 123.

The authentication determination module 123 receives the data of the OTP 1. When the authentication determination module 123 receives the data of the OTP 1, the authentication determination module 123 transmits to the one-time password generator 124 an instruction to generate a one-time password. When the one-time password generator 124 receives the instruction, the one-time password generator 124 generates data of a one-time password. The one-time password generator 124 in the automobile 1 can execute the same processing as that of the one-time password generator 222 in the key device 2, and can generate the same one-time password as that generated by the key device 2. In this embodiment, by so-called event synchronization, the one-time password generator 124 in the automobile 1 and the one-time password generator 222 in the key device 2 can generate solutions that are the same when compared with each other based on the same initial value and in the same order by substituting past solutions into a predetermined mathematical expression. The one-time password generator 124 in the automobile 1 and the one-time password generator 222 in the key device 2 share an algorithm, which is referred to as a mathematical expression, for generating the solution and the same initial value, and hence the one-time password generator 124 and the one-time password generator 222 can both sequentially generate the same solution in a synchronized state.

Through this mechanism, the one-time password generator 124 that has received a request from the authentication determination module 123 generates data of a one-time password, that is, data of the OTP 1 (Step S1003). The one-time password generator 124 transmits the generated data of the OTP 1 to the authentication determination module 123.

The authentication determination module 123 determines whether or not the data of the OTP 1 received from the internal/external determination module 122, that is, the data of the OTP 1 transmitted from the key device 2, matches the data of the OTP 1 received from the one-time password generator 124 (Step S1004). This determination corresponds to the processing of verifying whether or not the data of the OTP 1 transmitted from key device 2 is valid. When the two one-time passwords match, the authentication determination module 123 generates result data indicating that the OTP 1 transmitted from the key device 2 is valid. When the two one-time passwords do not match, the authentication determination module 123 generates result data indicating that the OTP 1 transmitted from the key device 2 is not valid.

After generating the result data, the authentication determination module 123 transmits the result data together with the external data to the drive module 125.

Not only for the OTP 1, the transmission of one-time passwords from the key device 2 to the automobile 1 may be performed under a state in which the one-time password is encrypted by the key device **2.** In that case, naturally, before the authentication determination module 123 of the automobile 1 verifies the validity of the one-time password, the computer device 12 is required to decrypt the encrypted one-time password.

The drive module 125 receives the result data and the external data. When the drive module 125 receives the result data together with the external data, the drive module 125 executes processing corresponding to the content of the result data.

In this embodiment, when the drive module 125 receives result data indicating that the OTP 1 transmitted from the key device 2 is valid, the drive module 125 generates lock data, which is data that controls the lock 13, and more specifically, is data that changes the lock 13 from the locked state to the unlocked state. That is, the drive module 125 in this embodiment generates lock data when both of two conditions are satisfied, namely, when a condition that the OTP 1 is valid and a condition that the OTP 1 has been transmitted from the key device 2 located in the external space are both satisfied.

When the drive module 125 receives result data indicating that the OTP 1 transmitted from the key device 2 is not valid, the drive module 125 does not generate the lock data. In this case, the lock 13 is not unlocked (described later) based on the lock data, and hence the user cannot get into the automobile **1.**

After generating the lock data, the drive module 125 transmits the lock data to the output module 126. The output module 126 transmits the lock data to the lock 13 via the interface 114 and the connection line 17. The lock 13 receives the lock data, and switches from the locked state to the unlocked state in accordance with the lock data (Step S1005). As a result, the lock 13 of the door 11 becomes unlocked, allowing the user to open the door 11 of the automobile 1 and get into the automobile 1.

The user gets into the automobile 1 via the door 11 and enters the internal space of the automobile 1. The key device 2, which has been brought into the internal space of the automobile 1 together with the user, continues to emit weak radio waves from the transmitting mechanism the key device 2 has. The weak radio waves emitted from the key device 2 located in the internal space of the automobile 1 continue to be received by the second antenna 15 installed in the automobile 1 as long as the key device 2 is located in the internal space.

The user presses the switch 22 of the key device 2 (Step S2004). Then, the one-time password generator 222 generates a one-time password (OTP 2) in the same way as when the OTP 1 is generated (Step S2005).

Like in the case of the data of the OTP 1, data of the OTP 2 is transmitted towards the automobile 1 (Step S2006).

The automobile 1 receives the data of the OTP 2 that is carried on radio waves by using the first antenna 14 (Step S1006). The data of the OTP 2 reaches the input module 121 from the first antenna 14 via the interface 114, and is transmitted from the input module 121 to the internal/external determination module 122.

The internal/external determination module 122 determines whether or not the data of the OTP 2 has been transmitted from the key device 2 located in the internal space of the automobile 1 or from the key device 2 located in the external space of the automobile 1 (performs internal/external determination) (Step S1007). As described above, the second antenna 15 continues to receive the weak radio waves emitted by the key device 2. A signal indicating that weak radio waves are being received continues to be input to the internal/external determination module 122 from the second antenna 15 via the interface 114 and the input module 121. As already described, the internal/external determination module 122 determines that the key device 2 is present in the internal space (determines that the data of the one-time password received at that time has been transmitted from the key device 2 located in the internal space of the automobile 1) when the second antenna 15 is receiving weak radio waves from the key device 2 when the data of the one-time password is received. Therefore, in this case, the internal/external determination module 122 determines that "the data of the OTP 2 has been transmitted from the key device 2 located in the internal space of the automobile **1,"** and generates internal data indicating this determination.

When the internal data is generated, the internal/external determination module 122 transmits the data of the OTP 2 together with the internal data to the authentication determination module 123.

The authentication determination module 123 receives the data of the OTP **2.** When the authentication determination module 123 receives the data of the OTP **2,** the authentication determination module 123 transmits to the one-time password generator 124 an instruction to generate a one-time password. When the one-time password generator 124 receives the instruction, the one-time password generator 124 generates data of a one-time password (Step S1008). The method of generating the data of the one-time password (OTP 2) is the same as when the one-time password (OTP 2) is generated by the one-time password generator 222 in the key device **2.**

The one-time password generator 124 transmits the generated data of the OTP 2 to the authentication determination module 123.

The authentication determination module 123 determines whether or not the data of the OTP 2 received from the internal/external determination module 122, that is, the data of the OTP 2 transmitted from the key device 2, matches the data of the OTP 2 received from the one-time password generator 124 (Step S1009). This determination corresponds to the processing of verifying whether or not the data of the OTP 2 transmitted from key device 2 is valid. When the two one-time passwords match, the authentication determination module 123 generates result data indicating that the OTP 2 transmitted from the key device 2 is valid. When the two one-time passwords do not match, the authentication determination module 123 generates result data indicating that the OTP 2 transmitted from the key device 2 is not valid.

After generating the result data, the authentication determination module 123 transmits the result data together with the internal data to the drive module 125.

The drive module 125 receives the result data and the internal data. When the drive module 125 receives the result data together with the internal data, the drive module 125 executes processing corresponding to the content of the result data.

In this embodiment, when the drive module 125 receives result data indicating that the OTP 2 transmitted from the key device 2 is valid, the drive module 125 generates ignition data, which is data for switching the ignition switch 16 from the OFF state to the ON state. That is, the drive module 125 in this embodiment generates ignition data when both of two conditions are satisfied, namely, when a condition that the OTP 2 is valid and a condition that the OTP 2 has been transmitted from the key device 2 located in the internal space are both satisfied.

When the drive module 125 receives result data indicating that the OTP 2 transmitted from the key device 2 is not valid, the drive module 125 does not generate the ignition data. In this case, the ignition switch 16 is not switched from the OFF state to the ON state based on the ignition data, and hence the engine of the automobile 1 does not start.

After generating the ignition data, the drive module 125 transmits the ignition data to the output module 126. The output module 126 transmits the ignition data to the ignition switch 16 via the interface 114 and the connection line 17. The ignition switch 16 receives the ignition data, and switches from the OFF state to the ON state (Step S1010). As a result, the engine of the automobile 1 is started, and hence the user can drive the automobile 1.

When the data of the one-time password is received after the processing of unlocking the lock 13 (Step S1005) is executed, the drive module 125 in this embodiment generates the ignition data only when the condition that the OTP 2 is valid and the condition that the OTP 2 has been transmitted from the key device 2 located in the internal space are both satisfied. When any one of those conditions is not satisfied, the drive module 125 does not generate the ignition data, and the engine of the automobile 1 is not started.

In addition to such processing of "not generating ignition data," the drive module 125 may perform the following operation. To put it simply, when a fraudulent action occurs after the lock 13 is unlocked, the drive module 125 in this embodiment may execute the following processing.

The following types of fraudulent actions may be considered.

A first case is when a one-time password is transmitted from the key device 2 located in the external space after the lock 13 has been unlocked. After the lock 13 has been unlocked, in a normal case, the user having the key device 2 enters the internal space of the automobile 1, and a one-time password (OTP 2) is transmitted from the key device 2 located in the internal space. Therefore, when a one-time password is transmitted from the key device 2 located in the external space after the lock 13 has been unlocked, it is assumed that an attack such as a relay attack is being carried out, and the transmission of the one-time password is considered to be a fraudulent action.

Even when a one-time password (OTP 2) is transmitted from the key device 2, the internal/external determination module 122 can determine whether the one-time password has been transmitted from the key device 2 located in the internal space or from the key device 2 located in the external space based on whether or not the second antenna 15 is receiving weak radio waves when the one-time password is transmitted. When it is determined that the one-time password has been transmitted from the key device 2 located in the external space, the internal/external determination module 122 generates "external data" indicating that determination.

The internal/external determination module 122 transmits the data of the OTP 2 together with the external data to the authentication determination module 123. The authentication determination module 123 requests the one-time password generator 124 to generate a one-time password in the same manner as described above, and determines whether or not the one-time password generated by the one-time password generator 124 matches the one-time password transmitted from the internal/external determination module 122. As already described, when the two one-time passwords match, the authentication determination module 123 generates result data indicating that the OTP 2 transmitted from the key device 2 is valid, and when the two one-time passwords do not match, the authentication determination module 123 generates result data indicating that the OTP 2 transmitted from the key device 2 is not valid.

The external data and the result data are transmitted from the authentication determination module 123 to the drive module 125. When the drive module 125 receives the external data and the result data after the lock 13 has been unlocked, regardless of the content of the result data, this case corresponds to "a case in which the one-time password has been transmitted from the key device 2 located in the external space after the lock 13 has been unlocked." As already described, this is one type of case in which a fraudulent action is deemed to have occurred, and therefore the drive module 125 generates lock data. The lock data in this case may be data indicating that the lock 13 that is in the unlocked state is to be set to the locked state, and the locked state is to be continued for a predetermined period of time (for example, 30 minutes) or longer. In this example, regardless of whether the content of the result data generated by the authentication determination module 123 indicates that the OTP 2 transmitted from the key device 2 is valid or indicates that the OTP 2 transmitted from the key device 2 is not valid, the processing executed by the drive module 125 remains the same. Therefore, in this example, after the lock 13 is unlocked, at the stage when it is found that a one-time password has been transmitted from the key device 2 located in the external space, that is, at the stage when the internal/external determination module 122 generates the external data, the processing executed by the authentication determination module 123 may be omitted, and the drive module 125 may generate the lock data as described above.

In any case, the lock data is transmitted from the drive module 125 to the lock 13 via the output module 126 and the interface 114. The lock 13 that receives the lock data is kept locked for a predetermined period of time, for example, 30 minutes.

Assuming a case in which a malicious third party pretending to be the user has already entered the internal space of the automobile 1 in which the lock 13 has been unlocked, the lock 13 is switched to the locked state and the locked state of the lock 13 is kept for 30 minutes, thereby holding the malicious third party in the internal space of the automobile 1 for 30 minutes. As a result, the malicious third party can be restrained, which at least increases the possibility that the fraudulent action committed by the malicious third party is exposed. In order to increase the possibility of exposing the fraudulent action committed by the malicious third party, it is also possible to sound a siren attached to the automobile 1, or to sound a car horn that is originally installed in the automobile 1. It would be obvious to a person skilled in the art that the sounding of a siren or car horn can be implemented by the function of the drive module 125, for example.

A second case in which a fraudulent action may be presumed is when a one-time password is transmitted from the key device 2 located in the internal space after the lock 13 has been unlocked, but that one-time password does not match the one-time password generated by the one-time password generator 124 of the automobile 1.

In this case, the first antenna 14 of the automobile 1 receives the one-time password transmitted from the key device 2.

Then, the internal/external determination module 122 executes the internal/external determination as described above, and because the key device 2 is located in the internal space of the automobile 1, the internal/external determination module 122 generates internal data.

Then, the authentication determination module 123 which has received the data of the one-time password and the internal data from the internal/external determination module 122 verifies the one-time password received from the internal/external determination module 122, that is, the one-time password received by the automobile 1 from the key device 2. Here, when the one-time password transmitted from the key device 2 is different from the one-time password received by the authentication determination module 123 from the one-time password generator 124, the authentication determination module 123 generates result data indicating that the one-time password received from the key device 2 does not match the one-time password received from the one-time password generator 124. In this case as well, one type of fraudulent action has occurred.

The drive module 125, which has received the internal data and the result data indicating that the one-time password received from the key device 2 does not match the one-time password received from the one-time password generator 124, generates, in the same way as described above, lock data indicating that the lock 13 that is in the unlocked state is to be set to the locked state, and the locked state is to be continued for a predetermined period of time or longer.

The subsequent processing is as already described, and for example, the third party who has committed the fraudulent action is trapped in the internal space of the automobile 1, and can be easily captured.

<Modification Example 1>

The internal/external determination module 122 in the first embodiment determines whether or not the data of the one-time password transmitted from the key device 2 has been transmitted from the key device 2 located in the internal space or transmitted from the key device 2 located in the external space based on whether or not the weak radio waves transmitted from the key device 2 are being received by the second antenna 15.

However, the internal/external determination module 122 may perform the above-mentioned determination based on another principle.

For example, a human sensor may be arranged in the internal space of the automobile 1. In this case, in a case in which the first antenna 14 receives data of a one-time password from the key device 2 when the presence of a person in the internal space is detected by the human sensor, the internal/external determination module 122 can determine that the data of the one-time password has been transmitted from the internal space. Conversely, in a case in which the first antenna 14 receives data of a one-time password from the key device 2 when the presence of a person in the internal space is not detected by the human sensor, the internal/external determination module 122 can determine that the data of the one-time password has been transmitted from the external space.

Further, the internal space of the automobile 1 may have a recess into which the key device 2 can be snugly fitted, and a base that can detect whether or not the key device 2 is fitted into the recess. In this case, when data of a one-time password has been transmitted from the key device 2 to the first antenna 14 under a state in which it has been detected that the key device 2 is fitted into the recess of the base, the internal/external determination module 122 can determine that the data of the one-time password has been transmitted from the internal space. Conversely, when data of a one-time password has been transmitted from the key device 2 to the first antenna 14 under a state in which it has not been detected that the key device 2 is fitted into the recess of the base, the internal/external determination module 122 can determine that the data of the one-time password has been transmitted from the external space.

<Modification Example 2>

In the first embodiment described above, the target object is the automobile **1,** but as already mentioned, the target object may be a room in a building.

In that case, the door 11 is a door that can be opened and closed to separate an internal space, which is the interior of a room for entering and exiting the room in the building, and an external space, which is the exterior of the room.

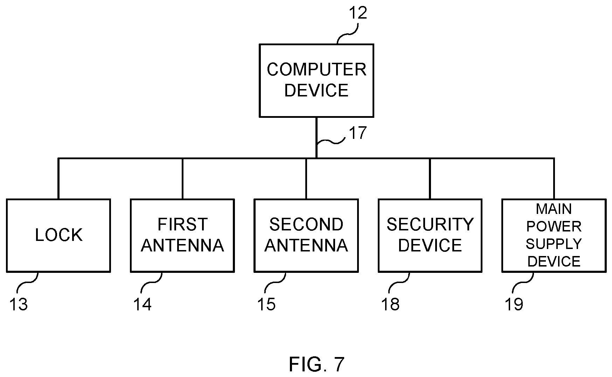

With the electronic key system of Modification Example **2,** when the target object is a room in a building, no changes are required to the key device **2,** but some changes are required to the hardware configuration of the room. In that case, the ignition switch 16 illustrated in FIG. 2 is omitted, and instead, a security device 18 and a main power supply device 19 are added, as illustrated in FIG. **7.**

The security device 18 is a device which transmits an alarm to appropriate devices inside and outside the building when a suspicious person is present in the internal space of the room. When the security device 18 is powered on, the security device 18 has a function of transmitting an alarm to the above-mentioned appropriate devices, and when the security device 18 is powered off, that function is turned off.

The main power supply device 19 is a higher-level power supply for products (for example, lighting equipment, an air conditioner, a television receiver) which use electric power in the room. When the main power supply device 19 is ON, electric power is supplied to products that use electric power in the room, and as a result, those products can be used. When the main power supply device 19 is OFF, electric power is not supplied to the above-mentioned products, and those products cannot be used.

The usage method and operation of the electronic key system of Modification Example 2 are the same as in the first embodiment.

When the user presses the switch 22 of the key device 2 outside the room, data of a one-time password (OTP 1) is wirelessly transmitted from the key device 2 to the first antenna 14. Then, similarly to the case of the first embodiment, the lock 13 becomes unlocked.

Next, when the user presses the switch 22 of the key device 2, in the room. Then data of a one-time password (OTP 2) is wirelessly transmitted from the key device 2 to the first antenna 14. In the case of the first embodiment, the drive module 125 then generates ignition data which changes the ignition switch 16 from the OFF state to the ON state, and the ignition switch 16 changes from the OFF state to the ON state based on the data transmitted from the drive module 125. However, in the case of Modification Example 2, the drive module 125 generates security data which changes the security device 18 from an ON state to an OFF state, and main power supply data which changes the main power supply device 19 from an OFF state to an ON state. The security data is transmitted from the drive module 125 to the security device 18 via the output module 126 and the interface 114. The security device 18 receives the data, and switches from an ON state to an OFF state. Meanwhile, the main power supply data is transmitted from the drive module 125 to the main power supply device 19 via the output module 126 and the interface 114. The main power supply device 19 receives the data, and switches from an OFF state to an ON state.

As a result, the user can use the room without the alarm being output by the security device 18, and can use the above-mentioned predetermined devices in the room to which electric power is being supplied from the main power supply device 19.

It is not required to have both of the security device 18 and the main power supply device 19, and only one of those may be arranged in the room.

<<Second Embodiment>>

Next, description is given of the second embodiment.

The second embodiment is almost the same as the first embodiment.

In the second embodiment as well, the target object is also the automobile 1, and the electronic key system is built by combining the automobile 1 with the key device **2.**

The electronic key system of the second embodiment is the same as the electronic key system of the first embodiment from a hardware perspective, and there is no difference between the first embodiment and the second embodiment in the function blocks formed in the computer device 12 of the automobile 1 and the function blocks formed in the key device **2.**

However, only a part of the functions of the drive module 125 formed in the computer device 12 of the automobile 1 differs between the first embodiment and the second embodiment.

Simply stated, in the first embodiment, the lock 13 is unlocked based on verification of the validity of only one (a single) one-time password (OTP 1), and the ignition switch 16 is switched from the OFF state to the ON state based on verification of the validity of only one (a single) one-time password (OTP 2) .

In contrast, in the second embodiment, the lock 13 is unlocked based on verification of the validity of a plurality (two in this embodiment, but the number is not limited to two) of one-time passwords (OTP 1 and OTP 2), and the ignition switch 16 is switched from the OFF state to the ON state based on verification of the validity of a plurality (two in this embodiment, but the number is not limited to two) of one-time passwords (OTP 3 and OTP 4).

Description is now given of a usage method and operation of the electronic key system according to the second embodiment.

A user tries to get into the automobile 1.

The user, who is in the external space, approaches the automobile 1 while holding the key device 2 and presses the switch 22 of the key device 2.

Then, similarly to the case of the first embodiment, data of a one-time password (OTP 1) is generated in the key device 2, and the generated data of the OTP 1 is transmitted from the key device 2 to the automobile 1. The automobile 1 receives the data of the OTP 1 by using the first antenna 14 of the automobile 1.

The internal/external determination module 122 determines whether or not the data of the OTP 1 has been transmitted from the key device 2 located in the internal space of the automobile 1 or from the key device 2 located in the external space of the automobile 1 (performs internal/external determination). When there is no fraudulent action, the internal/external determination module 122 generates external data.

Similarly to the case of the first embodiment, the internal/external determination module 122 transmits the data of the OTP 1 together with the external data to the authentication determination module 123.

When the data of the OTP 1 is received, similarly to the case of the first embodiment, the authentication determination module 123 transmits to the one-time password generator 124 an instruction to generate a one-time password, and verifies whether or not the data of the OTP 1 transmitted from the key device 2 is valid by determining whether or not the one-time password provided from the one-time password generator 124 matches the OTP 1 received from the internal/external determination module 122, that is, matches the OTP 1 transmitted from the key device **2.** Unless there is fraudulent action, there is a match, and hence the authentication determination module 123 generates result data indicating that the OTP 1 transmitted from the key device 2 is valid.

The result data and the external data are transmitted to the drive module 125.

In the first embodiment, the drive module 125, which has received the result data and the external data, generates lock data and unlocks lock 13. However, in the second embodiment, the drive module 125 does not perform any processing at this stage. The drive module 125 only records in, for example, a counter included in the drive module 125 (from a hardware perspective, the counter can be implemented by the RAM 113), that the result data and the external data have been received once.

The number of times that the switch 22 of the key device 2 is required to be pressed in order to unlock the lock 13 has been informed to the user by a certain method, for example, by a description in an instruction manual for the electronic key system.

In this embodiment, the user has been informed that the required number of presses is two, and thus the user presses the switch of the key device 2 again.

Then, similarly to when the switch 22 was pressed the first time, data of a one-time password (OTP 2) is transmitted from the key device 2 to the automobile 1, and, as long as there is no fraudulent action, the same result data and external data as described above are transmitted from the authentication determination module 123 to the drive module 125. As a result, the drive module 125 receives result data indicating such a result that the one-time password received from the key device 2 is valid, and the external data, twice. The drive module 125 in this embodiment generates the same lock data as described in the first embodiment only after receiving the data twice.

The subsequent processing up to the unlocking of the lock 13 is the same as that described in the first embodiment. When the lock 13 receives the lock data, the lock 13 is unlocked, and the user enters the internal space of the automobile **1**.

The user gets into the automobile 1 via the door 11, and presses the switch 22 of the key device 2 in the internal space of the automobile **1**. This causes data of a one-time password (OTP 3) to be transmitted from the key device 2 to the automobile **1**.

The internal/external determination module 122 determines whether or not the data of the OTP 3 has been transmitted from the key device 2 located in the internal space of the automobile 1 or from the key device 2 located in the external space of the automobile 1 (performs internal/external determination).

When there is no fraudulent action, the internal/external determination module 122 generates internal data. When the internal data is generated, the internal/external determination module 122 transmits the data of the OTP 3 together with the internal data to the authentication determination module 123.

The authentication determination module 123 receives the data of the OTP **3**. When the data of the OTP 3 is received, similarly to the case of the first embodiment, the authentication determination module 123 transmits to the one-time password generator 124 an instruction to generate a one-time password, and verifies whether or not the data of the OTP 3 transmitted from the key device 2 is valid by determining whether or not the one-time password provided from the one-time password generator 124 matches the OTP 3 received from the internal/external determination module 122, that is, matches the OTP 3 transmitted from the key device **2**. Unless there is fraudulent action, there is a match, and hence the authentication determination module 123 generates result data indicating that the OTP 3 transmitted from the key device 2 is valid.

The result data and the internal data are transmitted to the drive module 125.

In the first embodiment, the drive module 125, which has received the result data and the internal data, generates ignition data and switches the ignition switch 16 from the OFF state to the ON state. However, in the second embodiment, the drive module 125 does not perform any processing at this stage. The drive module 125 only records in, for example, a counter included in the drive module 125 (from a hardware perspective, the counter can be implemented by the RAM 113), that the result data and the internal data have been received once.

The number of times that the switch 22 of the key device 2 is required to be pressed in order to switch the ignition switch 16 from the OFF state to the ON state has been informed to the user by a certain method, for example by a description in an instruction manual for the electronic key system.

In this embodiment, the user has been informed that the required number of presses is two, and thus the user presses the switch of the key device 2 again.

Then, similarly to when the switch 22 was pressed the first time, data of a one-time password (OTP 4) is transmitted from the key device 2 to the automobile 1, and, as long as there is no fraudulent action, the same result data and internal data as described above are transmitted from the authentication determination module 123 to the drive module 125. As a result, the drive module 125 receives result data indicating such a result that the one-time password received from the key device 2 is valid, and the internal data, twice. The drive module 125 in this embodiment generates the same ignition data as described in the first embodiment only after receiving the data twice.

The subsequent processing is the same as that described in the first embodiment. When the ignition switch 16 receives the ignition data, the ignition switch 16 switches from the OFF state to the ON state, which allows the user to start the engine of the automobile 1.

**Claims**

1. An electronic key system, comprising:

   a target object which includes:

      a door which is openable and closable and which is configured to separate an internal space which is a space on an inner side of the door from an external space which is a space on an outer side of the door;
      a lock which is freely selectable between a locked state in which the door is not openable and an unlocked state in which the door is openable;
      a reception unit configured to wirelessly receive predetermined data; and
      an information processing device configured to execute information processing; and

   a key device to be used in combination with the target object which includes:

      a key device one-time password generator to generate a one-time password; and
      a transmission unit configured to wirelessly transmit the one-time password generated by the key device one-time password generator,

   wherein the information processing device of the target object includes:

      a target object one-time password generator configured to generate the same one-time password as the one-time password generated by the key device one-time password generator;

an internal/external determination module configured to determine whether the one-time password received from the key device via the reception unit has been transmitted from the key device located in the external space or from the key device located in the internal space;

an authentication determination module configured to determine whether the one-time password received from the key device via the reception unit matches the one-time password generated by the target object one-time password generator; and

a drive module configured to change the lock between the locked state and the unlocked state and to switch ON/OFF of a predetermined device different from the lock,

wherein the drive module is configured to change the lock from the locked state to the unlocked state when the one-time password from the key device determined by the internal/external determination module as having been transmitted from the key device located in the external space matches the one-time password generated by the target object one-time password generator, and to then switch ON/OFF of the predetermined device when the one-time password from the key device determined by the internal/external determination module as having been transmitted from the key device located in the internal space matches the one-time password generated by the target object one-time password generator.

2. The electronic key system according to claim 1, wherein the drive module is configured to change the lock from the locked state to the unlocked state when the one-time password from the key device determined by the internal/external determination module as having been transmitted from the key device located in the external space matches the one-time password generated by the target object one-time password generator by the number of times of two or more determined in advance.

3. The electronic key system according to claim 1, wherein the drive module is configured to switch ON/OFF of the predetermined device when the one-time password from the key device determined by the internal/external determination module as having been transmitted from the key device located in the internal space matches the one-time password generated by the target object one-time password generator by the number of times of two or more determined in advance.

4. The electronic key system according to claim **1**,

wherein the target object includes a location detection device configured to detect whether the key device is located in the external space or the internal space by capturing radio waves output by the key device at predetermined time intervals, and to generate location data corresponding to a location in which the key device is present, and

wherein the internal/external determination module is configured to determine, based on the location data generated by the location detection device, whether the one-time password received from the key device via the reception unit has been transmitted from the key device located in the external space or from the key device located in the internal space.

5. The electronic key system according to claim 1, wherein the target object is a vehicle.

6. The electronic key system according to claim 5, wherein the predetermined device is an ignition switch.

7. The electronic key system according to claim 1, wherein the target object is a room in a building.

8. The electronic key system according to claim 7, wherein the predetermined device is a security device or a main power supply device of the room.

9. The electronic key system according to claim 1, wherein the drive module is configured to maintain the locked state of the lock for at least a predetermined period of time when, after the lock has been changed from the locked state to the unlocked state, the one-time password is transmitted from the key device located in the external space, or the one-time password from the key device determined by the internal/external determination module as having been transmitted from the key device located in the internal space does not match the one-time password generated by the target object one-time password generator.

FIG. 1

EP 4 624 709 A1

12

COMPUTER
DEVICE

17

| LOCK | FIRST ANTENNA | SECOND ANTENNA | IGNITION SWITCH |

13    14    15    16

FIG. 2

111    112    113

| C P U | R O M | R A M |

116

| MASS STORAGE MEDIUM | INTERFACE |

115    114

FIG. 3

FIG. 4

FIG. 5

AUTOMOBILE                                    KEY DEVICE

START

PRESS SWITCH (S2001)

GENERATE OTP 1 (S2002)

RECEIVE OTP 1 (S1001) ←— TRANSMIT OTP 1 (S2003)

EXECUTE INTERNAL/EXTERNAL
DETERMINATION (S1002)

GENERATE OTP 1 (S1003)

VERIFY VALIDITY OF OTP 1
FROM KEY DEVICE (S1004)

UNLOCK LOCK (S1005)

PRESS SWITCH (S2004)

GENERATE OTP 2 (S2005)

RECEIVE OTP 2 (S1006) ←— TRANSMIT OTP 2 (S2006)

EXECUTE INTERNAL/EXTERNAL
DETERMINATION (S1007)

GENERATE OTP 2 (S1008)

VERIFY VALIDITY OF OTP 2
FROM KEY DEVICE (S1009)

TURN ON IGNITION SWITCH
(S1010)

END

FIG. 6

FIG. 7

## INTERNATIONAL SEARCH REPORT

| International application No. |
| --- |
| **PCT/JP2023/031254** |

### A. CLASSIFICATION OF SUBJECT MATTER

**E05B 49/00**(2006.01)i
FI:  E05B49/00 K

According to International Patent Classification (IPC) or to both national classification and IPC

### B. FIELDS SEARCHED

Minimum documentation searched (classification system followed by classification symbols)

E05B49/00-49/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2019-116791 A (PANASONIC INTELLECTUAL PROPERTY MANAGEMENT CO., LTD.) 18 July 2019 (2019-07-18)<br>entire text, all drawings | 1-9 |
| A | WO 2020/031707 A1 (OMRON CORP.) 13 February 2020 (2020-02-13)<br>entire text, all drawings | 1-9 |
| A | WO 2020/090232 A1 (JIGOWATTS INC.) 07 May 2020 (2020-05-07)<br>entire text, all drawings | 1-9 |

☐ Further documents are listed in the continuation of Box C.    ☑ See patent family annex.

| | |
| --- | --- |
| *   Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **25 October 2023** | **07 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/031254**

| Patent document cited in search report | | | Publication date (day/month/year) | Patent family member(s) | | | Publication date (day/month/year) |
|---|---|---|---|---|---|---|---|
| JP | 2019-116791 | A | 18 July 2019 | (Family: none) | | | |
| WO | 2020/031707 | A1 | 13 February 2020 | JP entire text, all drawings | 2020-23854 | A | |
| WO | 2020/090232 | A1 | 07 May 2020 | JP entire text, all drawings JP entire text, all drawings | 2020-72339 6501330 | A B1 | |

Form PCT/ISA/210 (patent family annex) (January 2015)